# EUROPEAN PATENT APPLICATION

(11) **EP 2 026 115 A2**
(43) Date of publication of application: **18.02.2009**
(21) Application number: 08014056.9
(22) Date of filing: 06.08.2008
(51) Int. Cl.: G02B 21/02, G02B 21/08

(54) **Objective lens**

(30) Priority: 09.08.2007 JP 2007207667
(71) Applicant: Mitutoyo Corporation, Kanagawa 213-0012 (JP)
(72) Inventor: Nagahama, Tasuya, Kawasaki, Kanagawa 213-0012 (JP); Arisawa, Katsuyoshi, Kawasaki, Kanagawa 213-8533 (JP)
(74) Representative: Altenburg, Udo

(57) **Abstract**

An objective lens (1) according to the invention includes a front-group lens G_{F}, a rear-group lens G_{R} which is arranged on the optical axis of the front-group lens G_{F} and on a side opposite to an object plane (2) with the front-group lens G_{F} interposed there between, and a semitransparent mirror (11) which is arranged between the front-goup lens G_{F} and the rear-group lens G_{R}, which reflects illumination into the front-group lens G_{F}, and which transmits reflected light from the object plane (2) and enters the transmitted light into the rear-group lens G_{R}. The front-group lens G_{F} is made of a cemented lens which is configured by sticking two lenses L₄ and L₅ together.

## Description

The present invention relates to an objective lens.

There has heretofore been known a microscope apparatus which includes an objective lens, and in which an electronic picture is obtained by imaging means, while an ocular observation can be performed by an ocular lens.

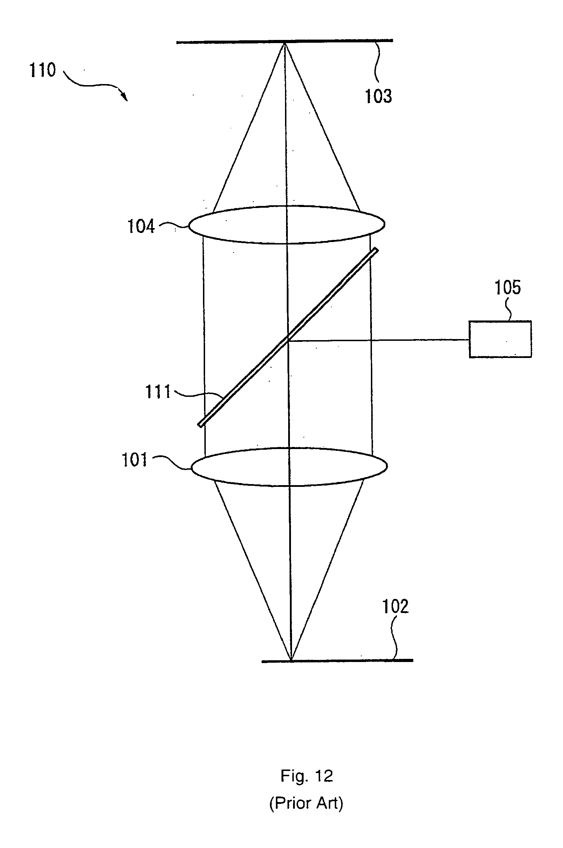

Figure 12 is a schematic diagram of the optical system 110 of the microscope apparatus including the prior art objective lens 101 as stated in JP2006317761A. Referring to fig. 12, numeral 105 designates a light source, numeral 111 a beam splitter, numeral 101 the objective lens, and numeral 104 an imaging lens. Illumination light from the light source 105 is reflected into the direction of 45 degrees by the beam splitter 111, and the reflected light is projected onto an object plane 102 through the objective lens 101. Besides, light reflected by the object plane 102 is transmitted through the beam splitter 111, and the transmitted light is condensed by the imaging lens 104 so as to be imaged on an image plane 103.

In the microscope apparatus stated in JP2006317761A, however, the objective lens 101 is configured of a plurality of lenses as shown in fig. 13, in order to correct various aberrations caused by the imaging, and hence, there has been the problem of flare light (from the lens flare) which is generated by the surfaces of the respective lenses of the objective lens 101. The "flare light" signifies light in which a mist seems to hang and which develops in such a way that the light for illumination causes reflections and scatterings at the surfaces of the objective lens and in the interior thereof. That is, the illumination light 106 entered from the light source 105 into the beam splitter 111 is reflected by the beam splitter 111 and is projected into the objective lens 101, so that it causes the reflection at the lens surface of the objective lens 101 and generates the flare light 107.

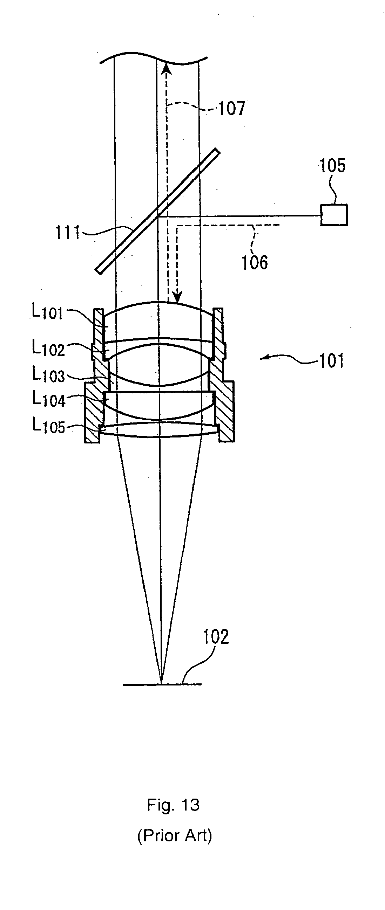

In a case where the objective lens 101 is configured by combining the plurality of lenses L101 - L105 as shown in fig. 13, flare light 107 is added up in correspondence with the number of the lenses, and hence, the light quantity of the flare light 107 sometimes becomes large to the extent of forming a hindrance in a measurement. When the light quantity of the flare light 107 is large, the contrast lowers worsening an appearance, and the appearance has sometimes even become problematic in practical use in spite of the favorable corrections of the aberrations.

An object of the present invention is to provide an objective lens which can reduce the development of flare light.

This object is achieved by the objective lens according to claim 1 of the present invention. Advantageous embodiments of the present invention are claimed in the dependent claims.

According to the invention, the semitransparent mirror is arranged between the front-group lens and the rear-group lens, so that the illumination light reflected by the semitransparent mirror is projected onto the object plane through the front-group lens, while the reflected light reflected by the object plane is transmitted through the semitransparent mirror and is projected onto an image plane side through the rear-group lens. Flare light is generated in such a manner that the illumination light to be projected onto the object plane through the objective lens is reflected by the lens surfaces of the objective lens. Therefore, when the semitransparent mirror is arranged between the front-group lens and the rear-group lens as in the invention, the flare light is generated by only the lens surfaces of the front-group lens, and it is not generated from the lens surfaces of the rear-group lens. Further, since the front-group lens is made of the single lens or the cemented lens configured by sticking the two lenses together, the number of the lens surfaces to generate the flare light can be made smaller than in the prior art objective lens, and a flare light quantity can be reduced.

According to the invention, the flare light is not generated from the lenses constituting the rear-group lens, so that the versatility of the design of the rear-group lens can be made comparatively high. Accordingly, when the rear-group lens is configured of the plurality of lenses, various aberrations can be corrected, and a lens performance can be enhanced.

According to the invention, the light between the front-group lens and the rear-group lens is in the state where it is parallel to the optical axis. Therefore, the arrangement of the optical system between the front-group lens and the rear-group lens can be endowed with versatility in such a manner that the semitransparent mirror can be easily arranged between the front-group lens and the rear-group lens.

The objective lens of the invention should preferably comprise a holding cylinder.

According to the invention, the front-group lens, the transparent mirror and the rear-group lens are assembled and held in the holding cylinder, and hence, they can be easily attached to and detached from, for example, a microscope or the like optical equipment, a projector, or a picture processing measurement equipment.

The realizations of the present invention will be described in the following in conjunction with the drawings.
- Fig. 1: is a conceptual diagram showing an optical system which includes an objective lens according to one realization of the present invention.
- Fig. 2: is a diagram showing a microscope in which the objective lens of this realization is mounted.

- Fig. 3: is a diagram showing the configuration and optical paths of an objective lens in the first embodiment of the invention.
- Fig. 4: is a diagram showing the various aberrations of the objective lens of the embodiment.
- Fig. 5: is a diagram showing the configuration and optical paths of an objective lens in the second embodiment of the invention.
- Fig. 6: is a diagram showing the various aberrations of the objective lens of the embodiment.
- Fig. 7: is a diagram showing the configuration and optical paths of an objective lens in the third embodiment of the invention.
- Fig. 8: is a diagram showing the various aberrations of the objective lens of the embodiment.
- Fig. 9: is a diagram showing the configuration and optical paths of an objective lens in the fourth embodiment of the invention.
- Fig. 10: is a diagram showing the various aberrations of the objective lens of the embodiment.
- Fig. 11: is a diagram showing the configuration and optical paths of an objective lens according to a modified embodiment of the invention.
- Fig. 12: is a conceptual diagram showing an optical system which includes a prior art objective lens.
- Fig. 13: is a diagram for explaining a problem in the prior art objective lens.

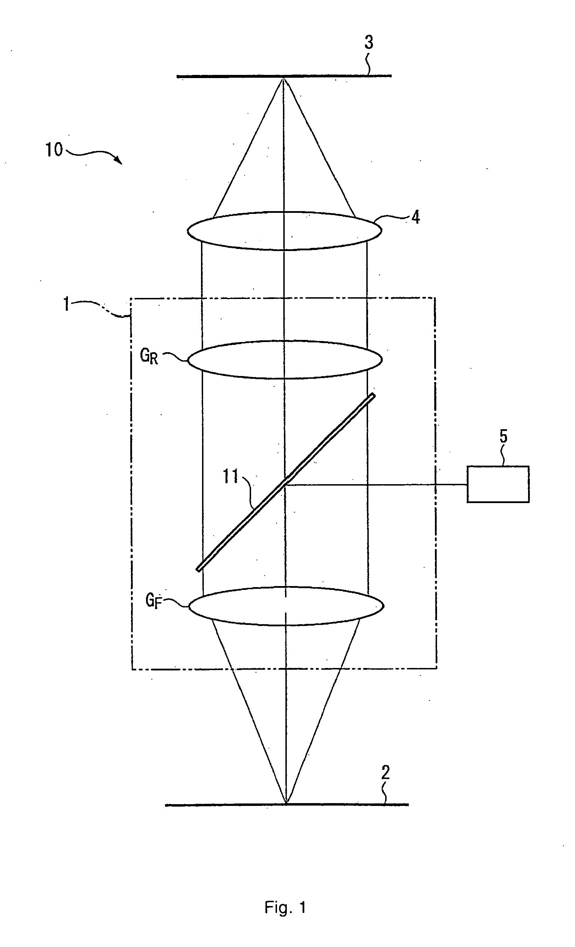

Figure 1 is a conceptual diagram showing an optical system 10 which includes an objective lens 1 in the realization of the invention. In the optical system 10, between an object plane 2 and an image plane 3, the objective lens 1 and an imaging lens 4 are arranged on an identical optical axis , the objective lens L1 being nearer to the object plane 2.

The objective lens 1 is configured including a front-group lens G_{F} on the side of the object plane 2, a rear-group lens G_{R} on the side of the image plane 3, and a semitransparent mirror 11 which is arranged between the front-group lens G_{F} and the rear-group lens G_{R}. In addition, the optical system 10 including the objective lens 1 includes an illumination device 5 which enters illumination light into the semitransparent mirror 11 of the objective lens 1.

When the illumination light from the illumination device 5 is entered into the semitransparent mirror 11 in a sense parallel to the object plane 2, it is reflected by the semitransparent mirror 11 and is projected in a direction orthogonal to the object plane 2. Besides, light reflected by the object plane 2 is turned into a parallel beam by the objective lens and is entered into the imaging lens 4. Light passed through the imaging lens 4 is imaged on the image plane 3. In this manner, epi-illumination is formed in the optical system 10 in this realization.

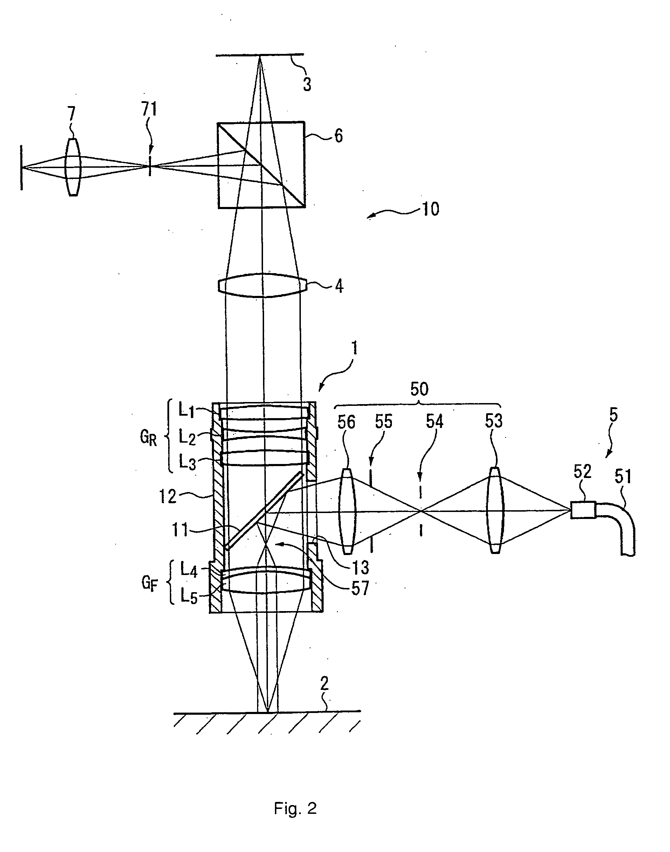

Figure 2 is a diagram showing a microscope being an optical equipment in which the objective lens 1 in this realization is mounted. The microscope includes the optical system 10 shown in fig. 1. Concretely, as shown in fig. 2, the microscope has the objective lens 1, the imaging lens 4, the illumination device 5, a semitransparent mirror 6 for an ocular lens, and the ocular lens 7. Besides, the microscope includes an illumination optical system 50 which is configured on the optical path of the illumination beam from the illumination device 5.

In addition, in this microscope, the light reflected by the object plane 2 and entered into the objective lens 1 is imaged on the image plane 3 through the imaging lens 4, and an image is picked up by a CCD camera or the like image pickup device which forms the image plane 3. Thus, the image of the object plane 2 can be acquired as an electronic picture. Besides, light reflected by the semitransparent mirror 6 for the ocular lens and proceeding in the direction of the ocular lens 7 is guided to the ocular lens 7 through a mid-image position 71 and is imaged at a visual field position. Thus, a user is capable of the ocular observation of the image of the object plane 2 at predetermined magnifications from the ocular lens 7.

The illumination device 5 includes a light source, not shown, which generates the illumination light, and an optical fiber 51.

The optical fiber 51 causes the illumination light from the light source to exit from its exit side end part 52 toward the illumination optical system 50.

The illumination optical system 50 is configured of a condensing lens 53, an aperture stop 54 for adjusting the light quantity of the illumination light, a field stop 55 for adjusting the visual field of the object plane, and a relay lens 56 are arranged in order from the side of the exit side end part 52, and it enters the illumination light from the optical fiber 51, into the semitransparent mirror 11 of the objective lens 1.

The front-group lens G_{F} of the objective lens 1 turns the illumination light reflected by the semitransparent mirror 11 into a parallel beam, which is projected onto the object plane 2. In this manner, Koehler illumination is formed by the illumination optical system 50. That is, the illumination light entered into the semitransparent mirror 11 is imaged onto the focal position 57 of the front-group lens G_{F} on the side of the transparent mirror 11, thereby to be uniformly projected onto the whole visual field range of the object plane 2 without being directly imaged onto the object plane 2.

The objective lens 1 includes a holding cylinder 12 which is a cylinder member of substantially circular cylindrical shape. The front-group lens G_{F} and rear-group lens G_{R} in one pair as stated before are assembled and held within the holding cylinder 12.

In the holding cylinder 12, a hole 13 which penetrates into the interior of this holding cylinder is formed in the substantially central part of the outer wall surface of this holding cylinder, and the semitransparent mirror 11 onto which the illumination light is projected through the hole 13 is assembled and held. As stated before, the semitransparent mirror 11 is arranged between the front-group lens G_{F} and the rear-group lens G_{R}.

The front-group lens G_{F} is made of a cemented lens in which a lens L5 and a lens L4 are stuck together, lens L5 being on the side of the object plane 2.

The semitransparent mirror 11 reflects the illumination light entered from the illumination device 5 toward the front-group lens G_{F}. Besides, the semitransparent mirror 11 transmits light reflected by the object plane 2 and turned into a parallel beam by the front-group lens G_{F}, there through as it is, and it guides the parallel beam to the rear-group lens G_{R}.

The rear-group lens G_{R} is made of a lens L3, a lens L2 and a lens L1 which are separated from one another, lens L3 being on the side of the object plane 2, and it is formed of a triplet in which one concave lens is arranged between two convex lenses at air intervals. Owing to such a rear-group lens G_{R}, the various aberrations of light to be imaged onto the image plane 3 are corrected.

The light corrected by the rear-group lens G_{R} is guided to the imaging lens 4 in the state of the parallel beam. That is, the microscope of this realization is designed as an infinity correction optical system which creates the image of the object plane 2 by using the objective lens 1 and the imaging lens 4.

According to this realization, advantages as stated below can be achieved:
(1) In comparison with the prior art objective lens 101, where the flare light is generated by six surfaces of the lenses forming prior art objective lens 101 as shown in fig. 12 and 13, lenses which generate the flare light are the two surfaces of the lenses L4 and L5 according to the objective lens 1 of this realization. Therefore flare light quantity can be reduced to 1/3.
(2) Since the lenses L1, L2 and L3 constituting the rear-group lens G_{R} do not affect the generation of the flare light, the versatility of design can be made comparatively high. That is, the rear-group lens G_{R} is formed of the triplet which is configured of the lenses L1, L2 and L3, whereby the various aberrations can be corrected, and a lens performance can be enhanced.
(3) The light between the front-group lens G_{F} and the rear-group lens G_{R} is turned into the parallel beam, whereby the arrangement of the optical system can be endowed with such a versatility that the semitransparent mirror 11 can be inserted.
(4) Multilayer antireflection films have heretofore been sometimes formed on the lens surfaces in order to reduce the flare light, but in case of observing a workpiece of low reflectivity, the flare light, which cannot be prevented even by the multilayer antireflection films and which is left behind, is sometimes generated to pose a problem in practical use. In contrast, according to the invention, the flare light can be reduced without employing the multilayer antireflection films, and hence, even the workpiece of low reflectivity can be observed.
(5) The radii of curvatures of the lens surfaces, for example, have heretofore been sometimes altered in order to reduce the flare light, but for the reduction of the flare light, the radii of curvatures need often to be altered in the directions of worsening the aberrations, and limitations in an optical design have been imposed. Also, there has been the problem that the lenses are liable to become lens shapes which are difficult to manufacture. In contrast, according to the invention, the flare light can be reduced without altering the shapes of the lenses, so that the lenses can be easily manufactured without suffering from the limitations in the optical design.
(6) A λ/4 wavelength plate has heretofore been sometimes attached in order to reduce the flare light, but the loss of light quantity is involved due to a polarizing optical element which is used simultaneously with the λ/4 wavelength plate, and there has been the problem that the loss leads also to the increase of manufacturing costs. In contrast, according to the invention, the flare light can be reduced without attaching the λ/4 wavelength plate, and hence, the loss of the light quantity and the increase of the manufacturing costs can be avoided.
(7) In a case where only the number of lenses constituting the rear-group lens G_{R} is increased without altering the lens configuration of the front-group lens G_{F}, the effect of reducing the flare light to be generated can be maintained because the lens configuration of the front-group lens G_{F} is the same, and besides, because of the increase of the number of lenses constituting the rear-group lens G_{R}, the corrections of the various aberrations by the rear-group lens G_{R} become more favorable, and the lens performance can be sharply enhanced.

Now, embodiments according to the invention will be described in conjunction with the drawings.

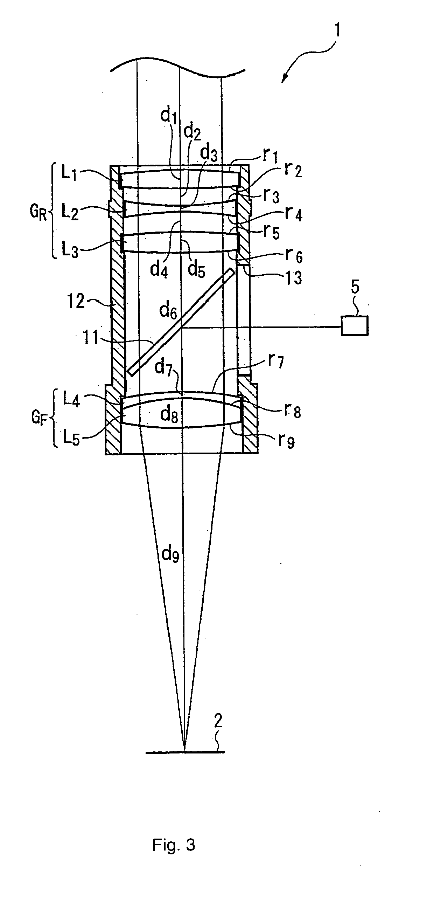

Figure 3 is a diagram concretely showing the configuration of the objective lens 1 of this embodiment. In the objective lens 1, the optical constants of individual lenses are set as indicated in Table 1, under the conditions (specification 1) of a focal distance f: 100 mm, an N. A. (Numerical Aperture): 0.15, and a visual field:
φ 1 mm.

Here, r₁ - r₉ denote the radii of curvatures of the respective surfaces of the individual lenses, d₁ - d₉, the thicknesses of the lenses, Nd₁ - Nd₅, the refractive indices of glass materials at the wavelength of d-rays (587.56 nm), and vd₁ - vd₅ the Abbe numbers of the glass materials. Incidentally, the focal distance f in the conditions indicates values at the d-rays.

**Table 1**

| Surface No. | Radius of Curvature (r) | | Thickness (d) | | Refractive Index (Nd) | | Dispersion (νd) | |
|---|---|---|---|---|---|---|---|---|
| 1 | r₁ | 125.7 | d₁ | 5.0 | Nd₁ | 1.62 | νd₁ | 60.3 |
| 2 | r₂ | -200.8 | d₂ | 5.0 | | | | |
| 3 | r₃ | -79.8 | d₃ | 1.5 | Nd₂ | 1.52 | νd₂ | 56.4 |
| 4 | r₄ | 75.7 | d₄ | 5.0 | | | | |
| 5 | r₅ | 211.6 | d₅ | 5.0 | Nd₃ | 1.62 | νd₃ | 60.3 |
| 6 | r₆ | -277.1 | d₆ | 30.0 | | | | |
| 7 | r₇ | 75.7 | d₇ | 1.5 | Nd₄ | 1.75 | νd₄ | 32.4 |
| 8 | r₈ | 46.1 | d₈ | 8.0 | Nd₅ | 1.50 | νd₅ | 81.6 |
| 9 | r₉ | -86.9 | d₉ | 92.5 | | | | |

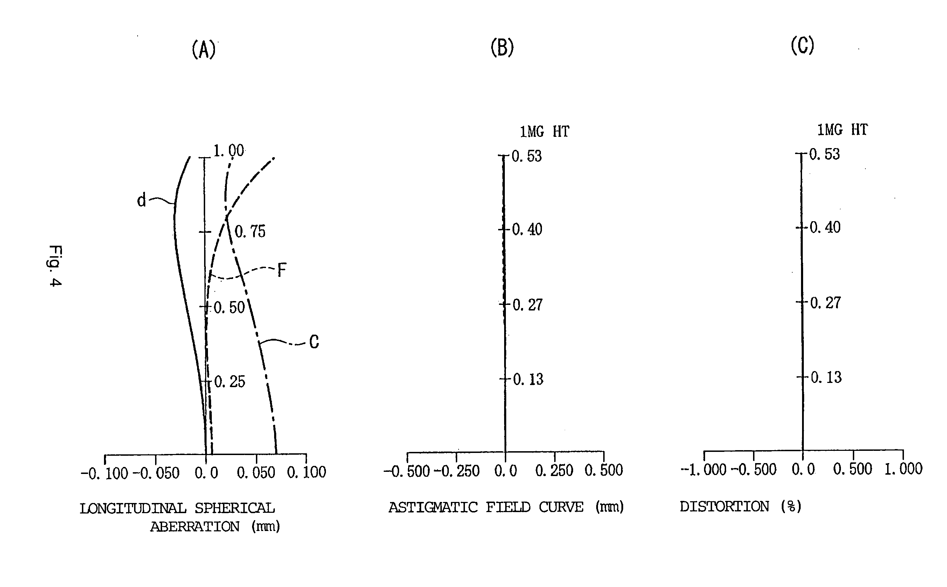

Optical paths in this embodiment are shown in fig. 3. Besides, longitudinal spherical aberrations (A), astigmatic field curves (B) and distortions (C) in this embodiment are shown in fig. 4. By the way, in fig. 4, d, F and C indicate the wavelengths of d-rays, F-rays and C-rays. As shown in fig. 4, it is seen that, according to the objective lens 1 of this embodiment, the various aberrations are favorably corrected.

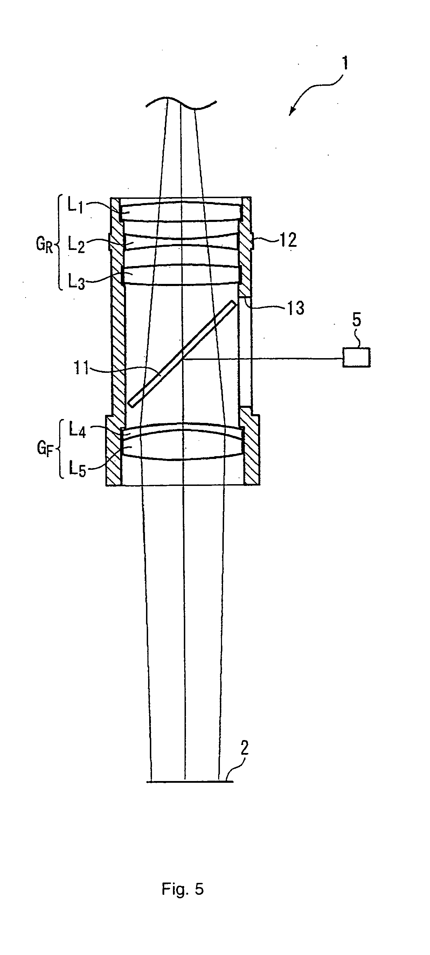

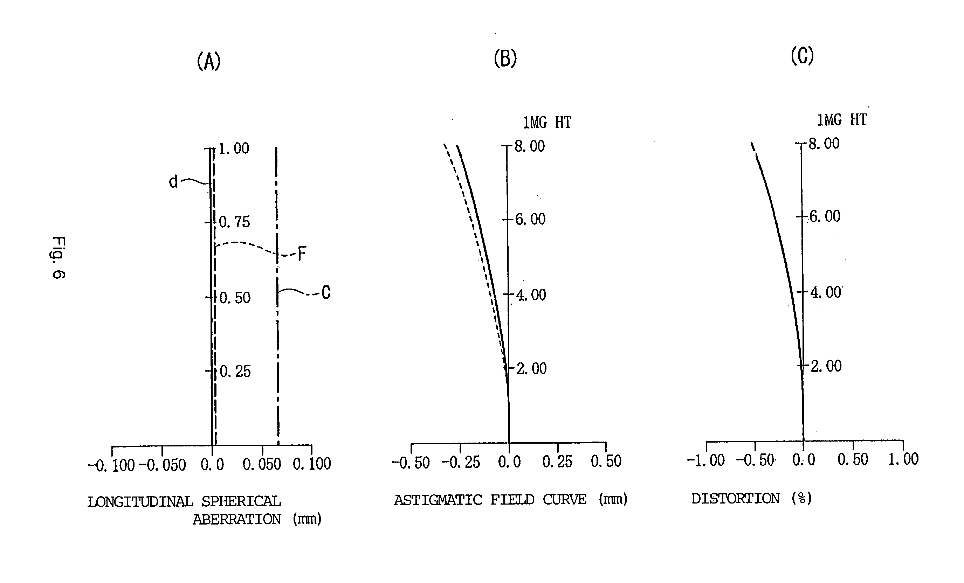

Figure 5 is a diagram concretely showing the configuration of the objective lens 1 of this embodiment, while fig. 6 is a diagram showing longitudinal spherical aberrations, astigmatic field curves and distortions in this embodiment.

As shown in fig. 5, in the second embodiment, the configuration of the individual lenses of the objective lens 1 of the first embodiment is employed, and the conditions (specification 1) stated before are changed into the conditions (specification 2) of a focal distance f: 100 mm, an N. A.: 0.01, and a visual field: φ 16 mm. In the specification 2, the N. A. is set to be smaller than in the specification 1, so that a resolution becomes lower, but that an image of larger focal depth can be obtained. As shown in fig. 6, it is seen that the various aberrations are favorably corrected also under the conditions (specification 2).

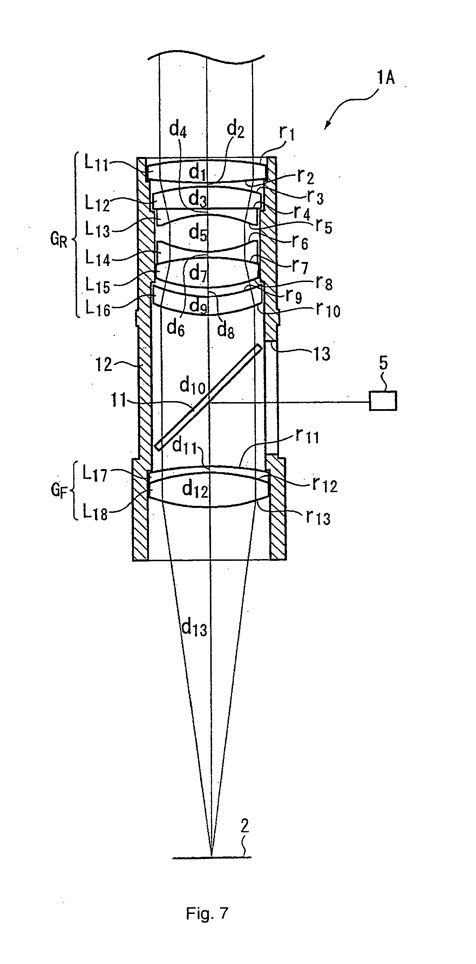

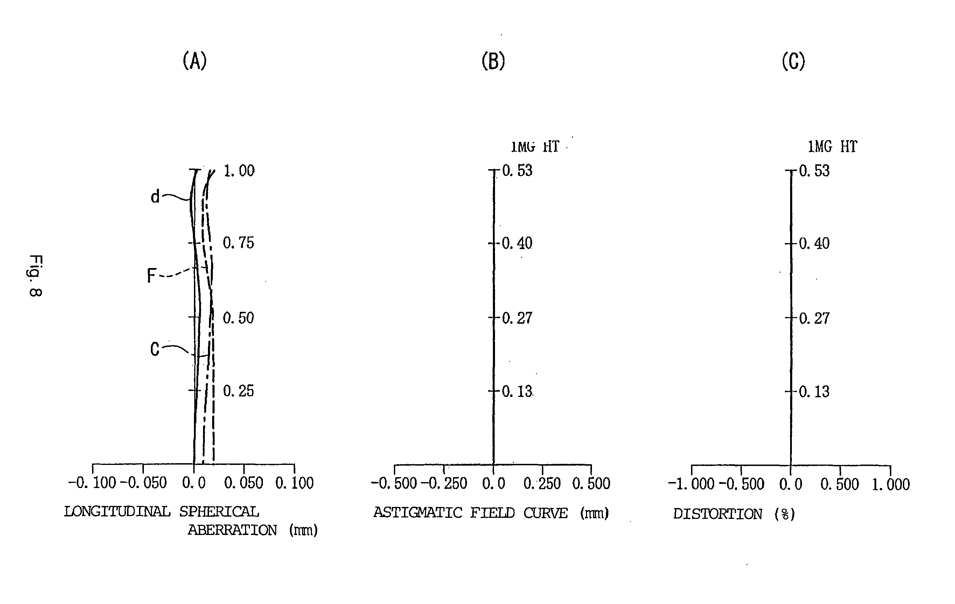

Figure 7 is a diagram concretely showing the configuration of the objective lens 1A of this embodiment, while fig. 8 is a diagram showing longitudinal spherical aberrations, astigmatic field curves and distortions in this embodiment.
The objective lens 1A differs in the configuration of the rear-group lens G_{R} from the foregoing objective lens 1 of the first embodiment, and it is substantially similar in the remaining configuration. That is, the objective lens 1A has the configuration in which the front-group lens G_{F}, the semitransparent mirror 11 and the rear-group lens G_{R} are arranged.

The front-group lens G_{F} is made of a cemented lens in which a lens L₁₈ and a lens L₁₇ are stuck together, L₁₈ being on the side of the object plane 2.

The rear-group lens G_{R} consists of a cemented lens in which a lens L₁₆, a lens L₁₅ and a lens L₁₄ are stuck together, L₁₆ being on the side of the object plane 2, a cemented lens in which a lens L₁₃ and a lens L₁₂ are stuck together, and a lens L₁₁. Therefore it is configured of three more lenses than in the objective lens of the first embodiment. The various aberrations are corrected by such a rear-group lens G_{R}.

In such a configuration, the optical constants of individual lenses are set as indicated in Table 2, under the conditions (specification 3) of a focal distance f: 100 mm, an N. A.: 0.15, and a visual field: φ 1 mm.

Here, r₁ - r₁₃ denote the radii of curvatures of the respective surfaces of the individual lenses, d₁ - d₁₃ the thicknesses of the lenses, Nd₁ - Nd₈ the refractive indices of glass materials at the wavelength of d-rays, and νd₁ - νd₈ the Abbe numbers of the glass materials. Incidentally, the focal distance f in the conditions indicates values at the d-rays.

**Table 2**

| Surface No. | Radius of Curvature (r) | | Thickness (d) | | Refractive Index (Nd) | | Dispersion (νd) | |
|---|---|---|---|---|---|---|---|---|
| 1 | r₁ | 73.1 | d₁ | 6.0 | Nd₁ | 1.50 | νd₁ | 81.6 |
| 2 | r₂ | -117.3 | d₂ | 1.0 | | | | |
| 3 | r₃ | 47.7 | d₃ | 6.0 | Nd₂ | 1.76 | νd₂ | 27.5 |
| 4 | r₄ | Infinite | d₄ | 1.5 | Nd₃ | 1.75 | νd₃ | 35.3 |
| 5 | r₅ | 28.8 | d₅ | 10.0 | | | | |
| 6 | r₆ | -26.3 | d₆ | 1.5 | Nd₄ | 1.55 | νd₄ | 59.8 |
| 7 | r₇ | 50.2 | d₇ | 8.0 | Nd₅ | 1.50 | νd₅ | 81.6 |
| 8 | r₈ | -37.5 | d₈ | 2.5 | | | | |
| 9 | r₉ | -32.2 | d₉ | 5.0 | Nd₆ | 1.50 | νd₆ | 81.6 |
| 10 | r₁₀ | -32.2 | d₁₀ | 40.0 | | | | |
| 11 | r₁₁ | 113.1 | d₁₁ | 1.5 | Nd₇ | 1.67 | νd₇ | 48.3 |
| 12 | r₁₂ | 37.5 | d₁₂ | 10.0 | Nd₈ | 1.50 | νd₈ | 81.6 |
| 13 | r₁₃ | -52.9 | d₁₃ | 92.5 | | | | |

Optical paths in this embodiment are shown in fig. 7. Besides, as shown in fig. 8, it is seen that, in this embodiment, the various aberrations are more favorably corrected than in the first embodiment, from the results of the longitudinal spherical aberrations, astigmatic field curves and distortions in this embodiment.

More specifically, when the objective lens 1A of this embodiment is compared with the objective lens 1 of the first embodiment, the lens configuration of the front-group lens G_{F} is identical, so that the effect of reducing the flare light to be generated can be maintained, and three more lenses constitute the rear-group lens G_{R}, so that the corrections of the various aberrations by the rear-group lens G_{R} become favorable, and a lens performance can be sharply enhanced.

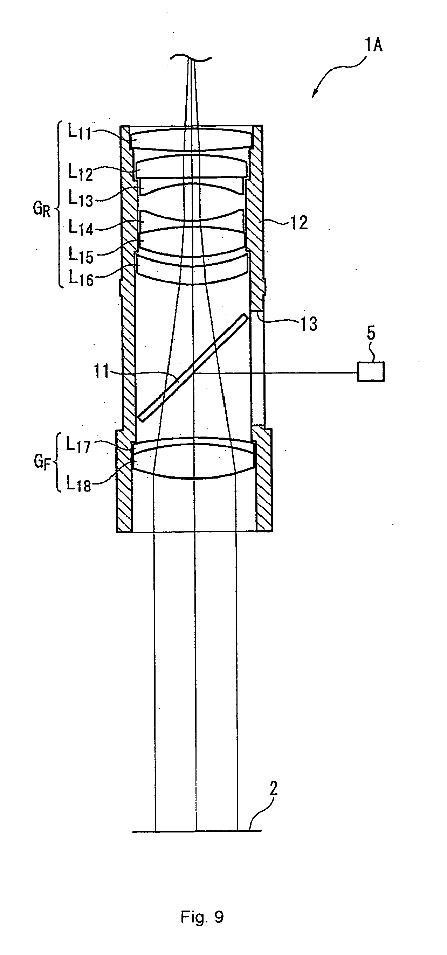

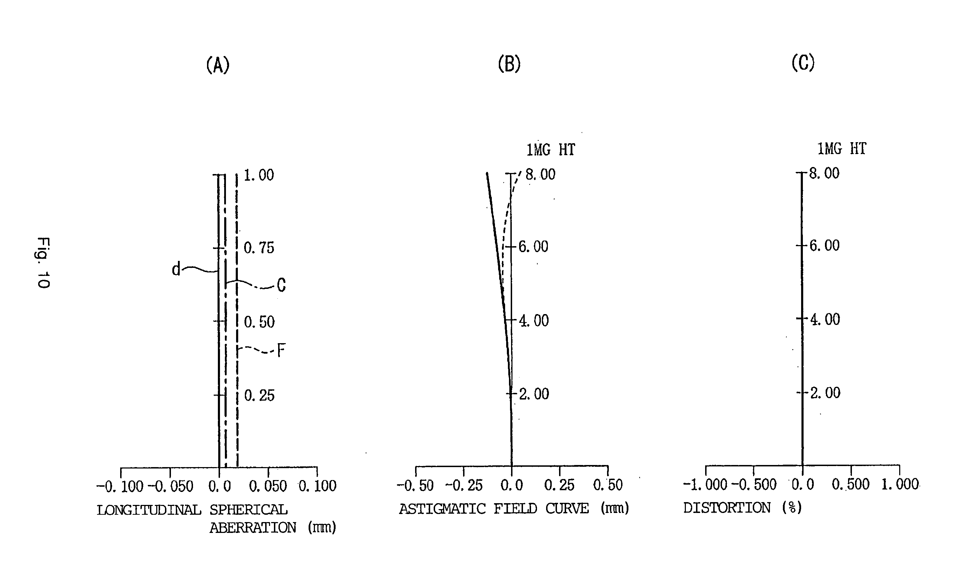

Figure 9 is a diagram concretely showing the configuration of the objective lens 1A of this embodiment, while fig. 10 is a diagram showing longitudinal spherical aberrations, astigmatic field curves and distortions in this embodiment.
As shown in fig. 9, in the fourth embodiment, the configuration of the individual lenses of the objective lens 1A of the third embodiment is employed, and the conditions (specification 3) stated before are changed into the conditions (specification 4) of a focal distance f: 100 mm, an N. A.: 0.01, and a visual field: φ 16 mm. In the specification 4, the N. A. is set to be smaller than in the specification 1, so that a resolution becomes lower, but that an image of larger focal depth can be obtained. As shown in fig. 10, it is seen that the various aberrations are more favorably corrected than in the first embodiment, also under the conditions (specification 4).

Incidentally, the invention as described above is not restricted to the foregoing embodiments, but modifications, improvements, etc. within a scope in which the object of the invention can be accomplished shall be covered by the invention.

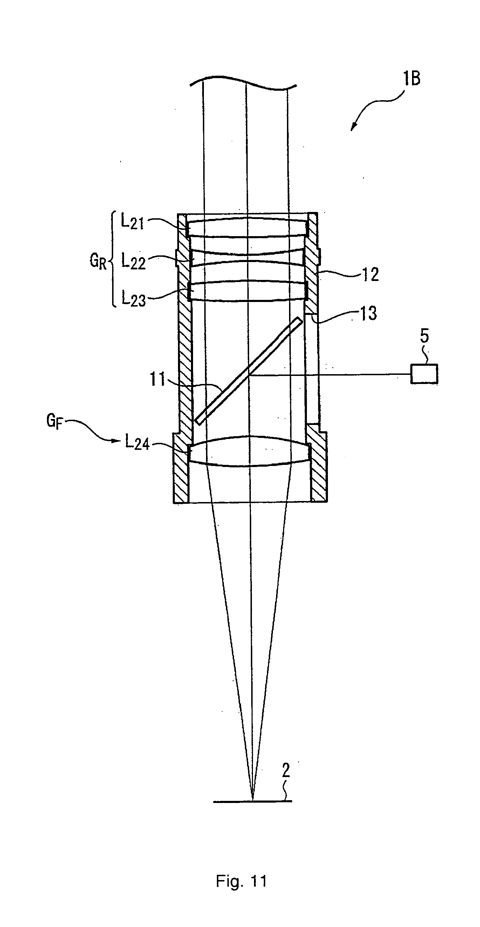

By way of example, the embodiments have been described by exemplifying the case where the front-group lens G_{F} is made of the cemented lens in which the two lenses are stuck together, but in the invention, the front-group lens G_{F} of an objective lens 1B may well be made of a single aspherical lens L₂₄ as shown in fig. 11. Incidentally, the rear-group lens G_{R} is configured of three lenses L₂₁, L₂₂ and L₂₃ in the same manner as in the embodiments. According to such an objective lens 1B, the lens to generate the flare light is only one aspherical lens L₂₄, so that the light quantity of the flare light can be reduced still further.

In each of the embodiments, the objective lens for combination with the imaging lens 4 has been described, but an objective lens may well have the function of imaging light onto the image plane, without being combined with the imaging lens.

In each of the embodiments, the imaging lens 4 may well be a zoom imaging lens which has a zoom function. In an objective lens for combination with the zoom imaging lens, the number of constituent lenses is sometimes made large in order to optimize aberrations at a tele-end (the position of the zoom imaging lens affording the largest magnifications, namely, the position of the maximum N. A.) and a wide-end (the position of the zoom imaging lens affording the smallest magnifications), and the flare light sometimes becomes more problematic. Accordingly, the flare light can be reduced more effectively by combining the objective lens of the invention with the zoom imaging lens.

Although each of the embodiments has described the case where the light between the front-group lens G_{F} and the rear-group lens G_{R} becomes the parallel beam, the light is not restricted to the parallel beam, but it may well be condensed light or divergent light. By way of example, the invention covers also a case where illumination light is adjusted and entered, so that the light between the front-group lens G_{F} and the rear-group lens G_{R} may not completely become the parallel beam, but that it may be somewhat condensed or be somewhat divergent. In this manner, the light between the front-group lens G_{F} and the rear-group lens G_{R} is not made the complete parallel beam, whereby saving in the space of the apparatus can be attained.

The embodiment has described the case where the illumination optical system 50 forming the Koehler illumination is included, but the illumination optical system 50 may well form any illumination other than the Koehler illumination.

The present invention is applicable to objective lenses which are mounted in a microscope or the like optical equipment, a projector, and a picture processing measurement equipment.

### Description of Reference Numerals and Signs

- 1, 1A, 1B: objective lenses,
- 2: object plane,
- 11: semitransparent mirror,
- 12: holding cylinder,
- 13: hole,
- G_{F}: front-group lens,
- G_{R}: rear-group lens,
- (A): longitudinal spherical aberration,
- (B): astigmatic field curve,
- (C): distortion.

## Claims

1. An objective lens (1) comprising:
a front-group lens (G_{F});
a rear-group lens (G_{R}) which is arranged on an optical axis of the front-group lens (G_{F}), and on a side opposite to an object plane (2) with the front-group lens (G_{F}) interposed there between; and
a semitransparent mirror (11) which is arranged between the front-group lens (G_{F}) and the rear-group lens (G_{R}), which reflects illumination light into the front-group lens (G_{F}), and which transmits reflected light from the object plane (2) and enters the transmitted light into the rear-group lens (G_{R});
wherein the front-group lens (G_{F}) is made of a single lens or a cemented lens which is configured by sticking two lenses together.

2. An objective lens (1) as defined in claim 1, wherein the rear-group lens (G_{R}) is made of a plurality of lenses.

3. An objective lens (1) as defined in claim 1 or 2, wherein light which passes between the front-group lens (G_{F}) and the rear-group lens (G_{R}) is in a state where it is parallel to the optical axis.

4. An objective lens (1) as defined in any of claims 1 to 3, further comprising:
a holding cylinder (12) which is a cylinder member of substantially circular cylindrical shape, and in which the front-group lens, the semitransparent mirror (11) and the rear-group lens (G_{R}) are assembled and held;
wherein the holding cylinder (12) is formed with a hole which penetrates into the interior of the holding cylinder (12), in a substantially central part of an outer wall surface of the holding cylinder (12); and light which illuminates the object plane (2) is entered into the semitransparent mirror (11) through the hole.
